# FASCICULE DE BREVET EUROPEEN

(11) **EP 3 976 938 B1**
(45) Date de publication et mention de la délivrance du brevet: **29.11.2023**
(21) Numéro de dépôt: 20737246.7
(22) Date de dépôt: 18.05.2020
(51) Int. Cl.: F01D 25/20

(54) **SYSTÈME DE LUBRIFICATION D'UN MOTEUR AÉRONAUTIQUE**
SCHMIERUNGSSYSTEM IN EINEM FLUGTRIEBWERK
LUBRICATION SYSTEM OF AN AIRCRAFT ENGINE

(30) Priorité: 24.05.2019 FR 1905516
(43) Date de publication de la demande: 06.04.2022
(73) Titulaire: Safran Aircraft Engines, 75015 Paris (FR)
(72) Inventeur: PORA, Loïc, 77550 Moissy-Cramayel (FR); DE WERGIFOSSE, Huguette, 77550 Moissy-Cramayel (FR)
(74) Mandataire: Gevers & Orès
(86) Numéro de dépôt international: PCT/FR2020/050821
(87) Numéro de publication internationale: WO 2020/240112

(56) Documents cités:
- WO-A1-2013/169313
- US-A- 2 571 166
- US-A1- 2010 028 127

## Description

### Domaine technique de l'invention

La présente invention concerne un système hydromécanique de régulation d'huile de lubrification d'une turbomachine.

### Arrière-plan technique

L'arrière-plan technique comprend notamment les documents US-A1-2010/028127, US-A-2 571 166 et WO-A1-2013/169313.

Les turboréacteurs d'avion ou moteurs aéronautiques sont équipés d'un système d'huile afin d'assurer une lubrification des différentes enceintes du moteur aéronautique et, le cas échéant, dans un réducteur ou boîte d'engrenages de réduction.

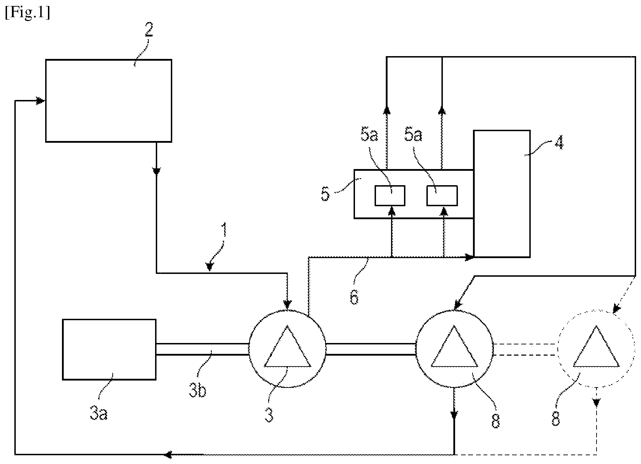

La figure 1 montre une première réalisation d'un système 1 de lubrification d'un moteur 5 aéronautique selon un premier état de la technique.

Un réservoir 2 d'huile de lubrification alimente au moins une première pompe 3 d'alimentation entraînée par des premiers moyens de motorisation 3a par l'intermédiaire d'un arbre de transmission 3b. Dans ce cas, le débit d'huile est donc proportionnel au régime des premiers moyens de motorisation 3a.

Ce débit d'huile est injecté dans des enceintes 5a à lubrifier du moteur 5 aéronautique en passant par un circuit de lubrification 6, ces enceintes 5a étant vidangées par au moins une pompe de récupération 8 qui fait retourner l'huile vidangée et récupérée vers le réservoir 2 d'huile.

Une première pompe de recirculation 8 est illustrée en trait plein tandis qu'une deuxième pompe de recirculation 8 est illustrée en pointillés pour montrer que cette deuxième pompe de recirculation 8 peut être absente ou alors être multiple avec un nombre de pompes de recirculation 8 supérieur à 2.

La ou les pompes d'alimentation 3 et les pompes de récupération 8 peuvent être disposées sur le même arbre de transmission 3b et donc être entraînées simultanément par les premiers moyens de motorisation 3a.

Comme il est fréquent d'adjoindre au moteur 5 aéronautique une boîte à engrenages de réduction, notamment pour l'entraînement d'éléments auxiliaires du moteur 5 aéronautique, il convient aussi d'assurer la lubrification des éléments de la boîte à engrenages de réduction. Ceci est particulièrement le cas pour un moteur 5 aéronautique à fort taux de dilution.

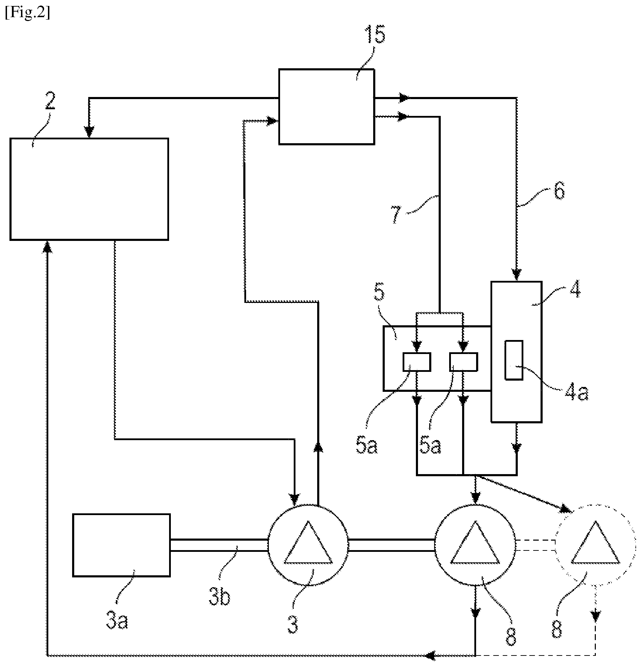

La figure 2 montre une deuxième réalisation d'un système 1 de lubrification d'un moteur 5 aéronautique selon un deuxième état de la technique avec un circuit de circulation d'huile 7 pour le moteur 5 aéronautique et la lubrification de ses enceintes 5a et un circuit de circulation d'huile 6 pour une boîte 4 à engrenages de réduction avec au moins une enceinte 4a.

Ce système 1 de lubrification, selon le deuxième état de la technique, reprend des caractéristiques du premier état de la technique, à savoir la présence d'un réservoir 2 d'huile de lubrification alimentant au moins une première pompe 3 d'alimentation entraînée par des premiers moyens de motorisation 3a par l'intermédiaire d'un arbre de transmission 3b, ces premiers moyens de motorisation 3a pouvant être directement ou indirectement connectés à la boîte 4 à engrenages de réduction.

Le système 1 de lubrification, selon le deuxième état de la technique, comporte aussi une ou des pompes de recirculation 8 qui font retourner le débit d'huile vers le réservoir 2 d'huile, ces pompes de recirculation 8 étant disposées sur le même arbre de transmission 3b que la première pompe 3 d'alimentation et donc étant entraînées simultanément.

La différence de ce système 1 de lubrification selon le deuxième état de la technique avec le premier système 1 de lubrification est qu'il comporte deux circuits 6, 7 séparés de lubrification avec un circuit de lubrification 6 dédié à la boîte 4 à engrenages de réduction avec au moins une enceinte 4a et un circuit de lubrification 7 dédié au moteur 5 aéronautique et à la lubrification des enceintes 5a contenues dans le moteur 5 aéronautique.

En sortie de la première pompe 3 d'alimentation, une conduite commune aux premier et deuxième circuits 6, 7 débouche sur une vanne quatre voies 15 en formant la première voie débouchante dans cette vanne quatre voies 15.

Une deuxième voie sortante de la vanne quatre voies 15 conduit au moteur 5 aéronautique, par le deuxième circuit de lubrification 7, pour la lubrification de ses enceintes 5a et une troisième voie sortante de la vanne quatre voies 15 conduit, par le premier circuit de lubrification 6, à la boîte 4 à engrenages de réduction pour sa lubrification d'au moins une enceinte 4a.

Une quatrième voie sortante de la vanne quatre voies 15 retourne au réservoir 2 de l'huile de lubrification.

L'huile de lubrification quitte respectivement la boîte 4 à engrenages de réduction et le moteur 5 aéronautique qui sont vidangées par les pompes de récupération 8 qui font retourner l'huile récupérée vers le réservoir 2 d'huile. Il peut y avoir une ou des pompes de récupération 8 spécifiquement dédiées au moteur 5 aéronautique et à la boîte 4 à engrenages de réduction ou l'huile récupérée de ces deux éléments 4, 5 peut être regroupée et envoyée vers les pompes de recirculation 8.

La vanne quatre voies 15 permet d'effectuer une régulation des débits d'huile en proportion différente envoyés vers le moteur 5 aéronautique, la boîte 4 à engrenages de réduction et le réservoir 2 d'huile pour un surplus d'huile non utilisé.

La régulation d'un tel système de lubrification est difficile à mettre en place.

Il s'avère ainsi que, bien que présentant l'avantage de mettre en oeuvre une lubrification régulée du moteur 5 aéronautique et de la boîte 4 à engrenages de réduction, le système 1 selon ce deuxième état de la technique est complexe et encombrant. En effet, particulièrement une commande de la vanne quatre voies 15 et la distribution de l'huile de lubrification dans les trois voies sortantes est difficile à réaliser.

Par conséquent, le problème à la base de l'invention est, dans un système de lubrification par circulation d'huile d'un moteur aéronautique, notamment une turbomachine, comprenant aussi une boîte à engrenages de réduction, de réaliser la lubrification du moteur aéronautique et de la boîte à engrenages de réduction de manière simple et efficace en dosant avec précision la quantité d'huile à envoyer respectivement dans le moteur aéronautique et la boîte à engrenages de réduction à engrenages.

### Résumé de l'invention

A cet effet, la présente invention concerne un système de lubrification d'un moteur aéronautique et d'une boîte à engrenages de réduction associée au moteur aéronautique, le système comprenant un réservoir d'huile de lubrification approvisionnant au moins une première pompe d'alimentation en huile alimentant un premier circuit de lubrification de la boîte à engrenages de réduction débouchant dans au moins une enceinte de lubrification de la boîte à engrenages de réduction et en parallèle un deuxième circuit de lubrification du moteur aéronautique débouchant dans des enceintes de lubrification du moteur aéronautique, des pompes de recirculation en sortie du moteur aéronautique et de la boîte à engrenages de réduction retournant l'huile vers le réservoir d'huile, caractérisé en ce que le deuxième circuit comprend une pompe à jet de section variable alimentée au moins par ladite au moins une première pompe d'alimentation en dérivation du premier circuit, une deuxième pompe d'alimentation entraînée étant intégrée dans le deuxième circuit en aval de la pompe à jet de section variable, une partie d'un débit dans le premier circuit étant prélevée par la pompe à jet de section variable pour alimenter le deuxième circuit.

La présente invention permet de réaliser une alimentation simplifiée à un besoin plus juste en huile de lubrification afin de simplifier le système de lubrification en plaçant une pompe à jet de section variable entre les première et deuxième pompes d'alimentation entraînées afin de moduler le débit aspiré dans le réservoir par la pompe à jet de section variable.

La pompe à jet permet de récupérer de l'énergie hydraulique en récupérant une partie de l'huile de lubrification en sortie de la première pompe d'alimentation.

Avantageusement, la pompe à jet de section variable est aussi alimentée par le réservoir d'huile, un débit dans le deuxième circuit en sortie de la pompe à jet de section variable étant la somme de la partie du débit prélevée dans le premier circuit par la pompe à jet de section variable avec un débit provenant du réservoir d'huile via la pompe à jet de section variable.

Avantageusement, la pompe à jet de section variable présente une première chambre de forme conique tronquée au sommet se rétrécissant en éloignement d'une embouchure de la pompe à jet de section variable et recevant en son intérieur la partie du débit prélevée à partir de l'embouchure, la première chambre étant entourée par une deuxième chambre dans laquelle débouche de l'huile provenant du réservoir d'huile, la première chambre débouchant dans la deuxième chambre par un débouché en logeant intérieurement un pointeau porté par une extrémité d'une tige mobile dans une longueur de la première chambre, un déplacement longitudinal de la tige étant piloté par un actionneur, le pointeau obstruant plus ou moins le débouché de la première chambre selon sa position dans la longueur de la première chambre. L'inverse est possible : nous pouvons imaginer un pointeau fixe, et une buse dont ont fait varier la position, de telle sorte que l'ensemble pointeau/buse fasse varier la section de passage.

Dans une première forme de réalisation, les premier et deuxième circuits de lubrification alimentent directement respectivement le moteur aéronautique et la boîte à engrenages de réduction sans se rejoindre.

Ceci permet de réguler le débit dans la boîte à engrenages de réduction et d'avoir un circuit classique du côté du moteur aéronautique et de ses enceintes.

La ou les premières pompe d'alimentation, en entrée du premier circuit, fournissent un débit proportionnel à la vitesse d'entraînement de la ou des premières pompes d'alimentation, avantageusement en relation avec la boîte à engrenages de réduction.

Une deuxième pompe d'alimentation, présente dans le deuxième circuit en aval de la pompe à jet de section variable est traversée par un débit proportionnel à la vitesse d'entraînement de la deuxième pompe d'alimentation.

La pompe à jet permet de soustraire une partie du débit sortant de la ou des premières pompes d'alimentation pour alimenter la deuxième pompe d'alimentation. Ainsi, dans une première forme de réalisation de l'invention, le débit allant vers la boîte à engrenages de réduction peut être égal au débit de la première pompe d'alimentation moins le débit prélevé par la pompe à jet de section variable.

Le débit de sortie de la pompe à jet de section variable étant fixé par la deuxième pompe d'alimentation dans le deuxième circuit, il est possible de calculer le débit aspiré directement du réservoir d'huile par la pompe à jet à section constante.

La connaissance des différents débits de la pompe à jet de section variable ainsi que des pressions d'alimentation permet de connaître la pression d'entrée de la deuxième pompe d'alimentation du deuxième circuit, supérieure à la pression du réservoir.

Un avantage de la présente invention est que l'énergie créée par la ou les premières pompes d'alimentation du premier circuit et non utilisée pour lubrifier la boîte à engrenages de réduction ne sera pas dissipée mais utilisée pour décharger la deuxième pompe d'alimentation, ceci au rendement de la pompe à jet de section variable près. Un gain de puissance consommée est ainsi obtenu.

Dans une deuxième forme de réalisation de l'invention, les premier et deuxième circuits de lubrification peuvent se rejoindre en aval de la pompe à jet de section variable puis se séparer à nouveau au niveau d'une vanne trois voies avec une voie d'entrée commune aux premier et deuxième circuits, une première sortie sur une prolongation du deuxième circuit vers le moteur aéronautique et une deuxième sortie sur une prolongation du premier circuit vers la boîte à engrenages de réduction.

Il est ainsi possible d'obtenir un débit global dans les premier et deuxième circuits alors réunis avant que le débit global ne soit réparti vers la boîte à engrenages de réduction et le moteur aéronautique par l'intermédiaire d'une vanne trois voies.

En reliant les sorties des première et deuxième pompes d'alimentation présentes respectivement dans le premier circuit et le deuxième circuit, le débit sortant vers la vanne trois voies est égal au débit du premier circuit additionné du débit du réservoir d'huile à la pompe à jet de section variable.

Il y donc un sur-débit après jonction des premier et deuxième circuits au-delà d'une caractéristique proportionnelle à la vitesse d'entraînement de la ou des premières pompes d'alimentation. C'est la vanne trois voies qui permet en aval de répartir les débits vers la boîte à engrenages de réduction ou les enceintes du moteur aéronautique.

Avantageusement, ladite au moins une première pompe d'alimentation est disposée sur un arbre entraîné directement ou indirectement par la boîte à engrenages de réduction en tant que premiers moyens de motorisation.

Avantageusement, les pompes de recirculation en sortie du moteur aéronautique sont disposées et entraînées sur l'arbre de ladite au moins une première pompe d'alimentation.

La présente invention concerne aussi un ensemble d'une unité électronique de contrôle et d'un système de lubrification d'un moteur aéronautique et d'une boîte à engrenages de réduction associée au moteur aéronautique, caractérisé en ce que le système est tel que précédemment décrit, l'unité électronique de contrôle intégrant des moyens de calcul d'un débit d'huile respectif dans le deuxième circuit vers le moteur aéronautique et dans le premier circuit vers la boîte à engrenages de réduction,
- l'unité électronique de contrôle comprenant des moyens de commande d'ouverture de la pompe à jet de section variable afin que le débit dans le premier circuit, après prélèvement par la pompe à jet de section variable de la partie du débit dans le premier circuit pour alimenter le deuxième circuit, soit égal au débit d'huile calculé vers la boîte à engrenages de réduction et, la deuxième pompe étant entraînée par des deuxièmes moyens de motorisation, l'unité de contrôle comprenant des moyens de commande d'une vitesse de rotation des deuxièmes moyens de motorisation de la deuxième pompe afin d'assurer le débit d'huile calculé dans le deuxième circuit, ou
- l'unité électronique de contrôle intégrant des moyens de commande de la vanne trois voies afin d'assurer le débit d'huile calculé dans le deuxième circuit vers le moteur aéronautique et le débit d'huile calculé dans le premier circuit vers la boîte à engrenages de réduction.

L'invention concerne aussi une turbomachine en tant que moteur aéronautique comportant un tel ensemble d'une unité électronique de contrôle et d'un système de lubrification.

La présente invention concerne un procédé de régulation d'un débit d'huile de lubrification dans une telle turbomachine, caractérisé en ce qu'il est effectué un calcul des débits respectifs vers le moteur aéronautique et la boîte à engrenages de réduction, le procédé mettant en oeuvre des lois de pilotage de la pompe à jet de section variable et, le cas échéant, de la vanne trois voies pour que les débits effectifs vers le moteur aéronautique et la boîte à engrenages de réduction soient respectivement égaux aux débits respectifs calculés.

Il est ainsi possible de définir une loi de commande de la pompe à jet de section variable permettant d'avoir au moins un débit vers la boîte à engrenages de réduction au juste besoin.

Dans le premier cas de figure, le débit allant aux enceintes du moteur aéronautique reste égal au débit de la deuxième pompe d'alimentation et donc proportionnel à la vitesse de rotation de la deuxième pompe d'alimentation, comme c'était le cas dans l'état de la technique.

Il est possible de définir la loi d'ouverture de la pompe à jet de section variable permettant d'avoir un débit au plus juste du besoin, sans atteindre le point de cavitation dans la pompe à jet.

En effet, à haute altitude de fonctionnement du moteur aéronautique par exemple, des pressions basses peuvent provoquer une vaporisation localisée de l'huile sous forme de bulles qui peuvent ensuite imploser et endommager les éléments pompants. Ce phénomène est appelé cavitation. Cet endommagement réduit la durée de vie des pompes.

Une fois la loi d'ouverture de la pompe à jet de section variable implémentée, le débit de chaque premier ou deuxième circuit est calculé selon la vitesse d'entraînement respectivement des première et deuxième pompes d'alimentation.

Une telle régulation au juste besoin pouvait être réalisée avec des machines électriques. Pour autant, une telle architecture n'était pas avantageuse en termes de masse, coûts et développement, au regard du gain potentiel d'une régulation au juste besoin.

Le procédé selon la présente invention permet de mettre en oeuvre de manière économique une régulation d'au moins un débit au juste besoin, sans modifier le circuit de lubrification des enceintes du moteur ou de la boîte à engrenages de réduction.

### Brève description des figures

D'autres caractéristiques, buts et avantages de la présente invention apparaîtront à la lecture de la description détaillée qui va suivre et au regard des dessins annexés donnés à titre d'exemples non limitatifs et sur lesquels :
[Fig. 1] la figure 1 montre un système de lubrification d'un moteur aéronautique selon un premier état de la technique,
[Fig. 2] la figure 2 montre un système de lubrification d'un moteur aéronautique et d'une boîte à engrenages de réduction associée au moteur aéronautique selon un deuxième état de la technique,
[Fig. 3] la figure 3 montre un système de lubrification d'un moteur aéronautique et d'une boîte à engrenages de réduction associée au moteur aéronautique conformément à une première forme de réalisation selon la présente invention,
[Fig. 4] la figure 4 montre un système de lubrification d'un moteur aéronautique et d'une boîte à engrenages de réduction associée au moteur aéronautique conformément à une deuxième forme de réalisation selon la présente invention,
[Fig. 5] la figure 5 montre une vue en coupe d'une pompe à jet de section variable, agrandie par rapport aux figures 3 et 4, cette pompe à jet de section variable pouvant être mise en oeuvre dans un système de lubrification selon la présente invention,
[Fig. 6] la figure 6 montre quatre courbes d'un besoin d'huile et d'une estimation de débit d'huile respectivement pour un moteur aéronautique et une boîte à engrenages de réduction, ces courbes résultant d'une mise en oeuvre du procédé de régulation dans un système de lubrification selon la présente invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité, le moteur aéronautique étant illustré en étant de dimension plus réduite qu'il ne l'est en réalité par rapport à une boîte à engrenages de réduction.

### Description détaillée de l'invention

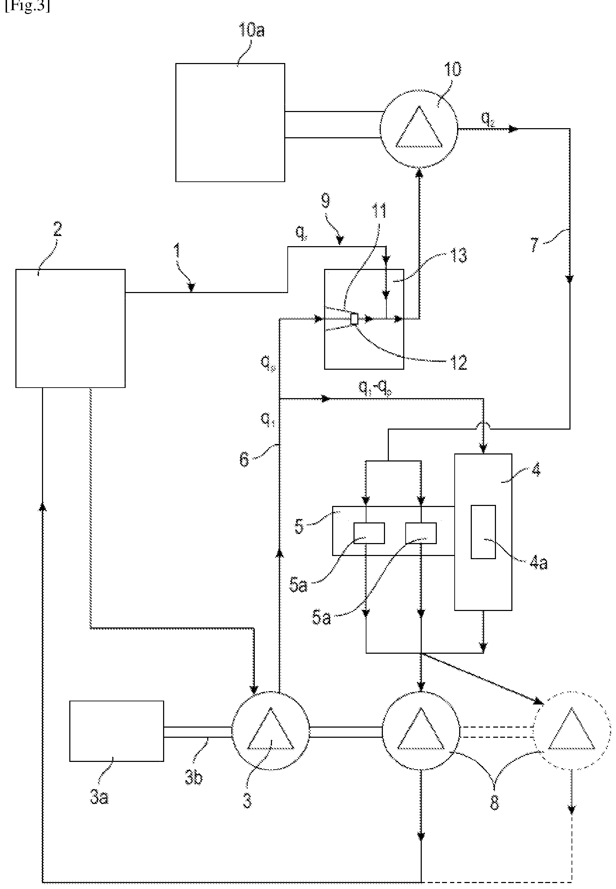

Dans ce qui va suivre, il est fait référence à toutes les figures et notamment aux figures 3 à 5 prises en combinaison. Quand il est fait référence à une ou des figures spécifiques, ces figures sont à prendre en combinaison avec les autres figures pour la reconnaissance des références numériques désignées.

Les figures 1 et 2 ont déjà été décrites dans la partie introductive de la présente description.

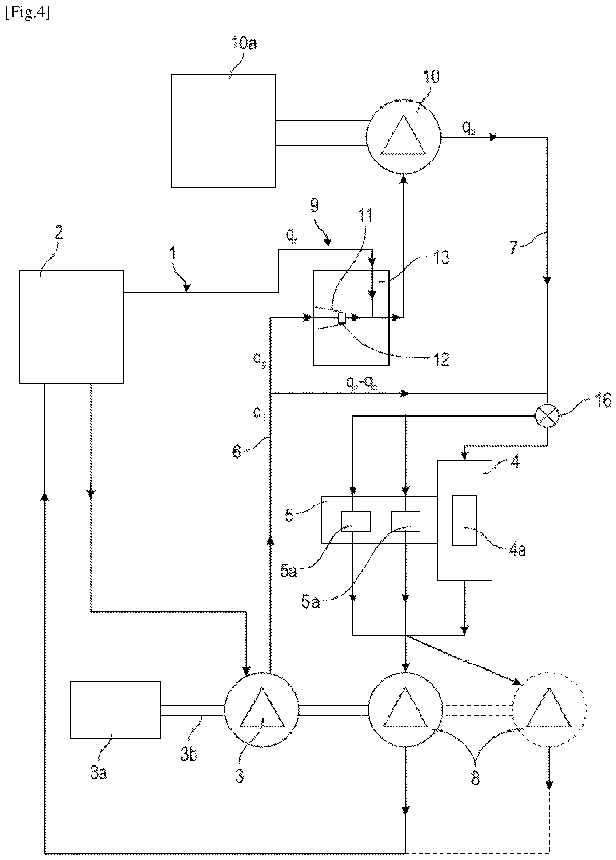

En se référant principalement aux figures 3 et 4, la présente invention concerne un système 1 de lubrification d'un moteur 5 aéronautique et d'une boîte 4 à engrenages de réduction associée au moteur 5 aéronautique.

Le système 1 de lubrification comprend un réservoir 2 d'huile de lubrification approvisionnant au moins une première pompe 3 d'alimentation entraînée par des premiers moyens de motorisation 3a.

La première pompe 3 d'alimentation fournit au moins partiellement un débit d'huile, d'une part, dans un premier circuit 6 de lubrification de la boîte 4 à engrenages de réduction débouchant dans au moins une enceinte 4a de lubrification de la boîte 4 à engrenages de réduction et, d'autre part, à un deuxième circuit 7 de lubrification du moteur 5 aéronautique débouchant dans des enceintes 5a de lubrification du moteur 5 aéronautique, le deuxième circuit 7 étant monté en dérivation du premier circuit 6. Des pompes de recirculation 8 en sortie du moteur 5 aéronautique et de la boîte 4 à engrenages de réduction retournent l'huile vers le réservoir 2 d'huile. Il peut y avoir deux ou plus premières pompes d'alimentation 3 et de une à dix voire plus pompes de recirculation 8.

Les pompes de recirculation 8 peuvent être communes pour assurer une récupération d'huile aussi bien en sortie du moteur 5 aéronautique que de la boîte 4 à engrenages de réduction ou séparées entre une sortie du moteur 5 aéronautique et une sortie de la boîte 4 à engrenages de réduction.

La ou les premières pompes 3 d'alimentation du premier circuit 6, les pompes de recirculation 8 et, le cas échéant, une deuxième pompe 10 d'alimentation présente dans le deuxième circuit 7 peuvent être des pompes volumétriques.

Selon l'invention, le deuxième circuit 7, juste en aval de sa séparation avec le premier circuit 6 par dérivation, comprend une pompe à jet 9 de section variable alimentée au moins par ladite au moins une première pompe 3 d'alimentation en dérivation du premier circuit 6.

Le deuxième circuit 7 comprend aussi une deuxième pompe 10 d'alimentation, disposée en aval de la pompe à jet 9 de section variable.

A partir de la dérivation du deuxième circuit 7 sur le premier circuit 6, une partie d'un débit Qp dans le premier circuit 6 est prélevée par la pompe à jet 9 de section variable pour alimenter le deuxième circuit 7.

Aux figures 3 et 4, le débit dans le premier circuit 6 en amont de la première pompe 3 est référencé Q1, le débit prélevé par la pompe à jet 9 de section variable est référencé Qp et le débit dans le deuxième circuit 7 est référencé Q2 en étant égal au débit prélevé par la pompe à jet 9 de section variable Qp additionné du débit en provenance du réservoir 2 d'huile Qr et passant aussi par la pompe à jet 9 de section variable.

En effet, la pompe à jet 9 de section variable peut aussi être alimentée par le réservoir 2 d'huile. Le débit Q2 dans le deuxième circuit 7 en sortie de la pompe à jet 9 de section variable, régulé par la deuxième pompe 10 est ainsi la somme de la partie du débit prélevée Qp dans le premier circuit 6 par la pompe à jet 9 de section variable avec le débit Qr provenant du réservoir 2 d'huile via la pompe à jet 9 de section variable.

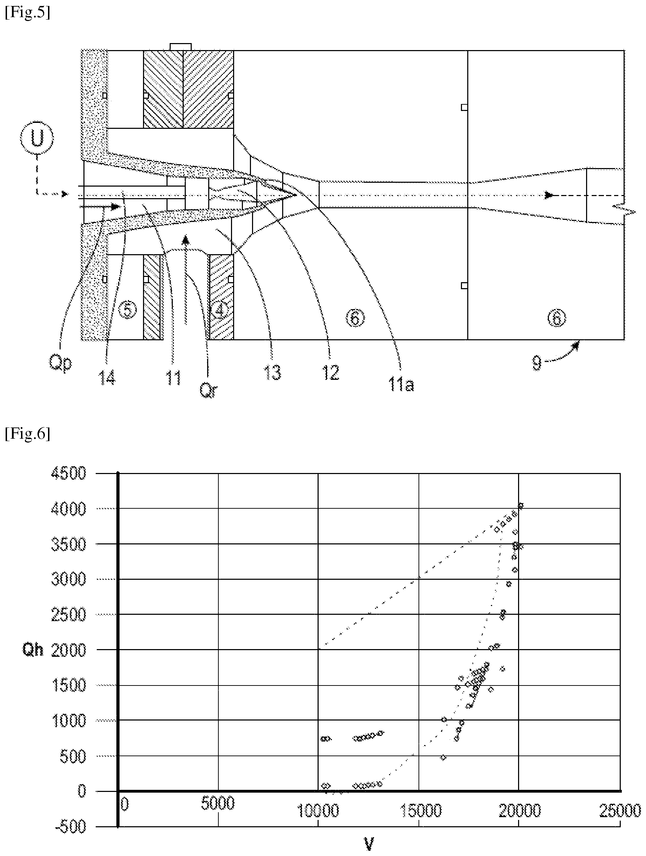

Comme il peut être vu à la figure 5, la pompe à jet 9 de section variable peut présenter une première chambre 11 formant buse pour l'introduction de la partie de débit prélevée Qp dans la pompe à jet 9 de section variable.

Cette première chambre 11 peut présenter une forme conique tronquée au sommet pour présenter un débouché 11a. La forme conique peut se rétrécir en éloignement d'une embouchure de la pompe à jet 9 de section variable et recevoir en son intérieur la partie du débit prélevée Qp à partir de l'embouchure jusqu'au débouché 11a pointant vers une sortie de la pompe à jet 9 de section variable.

La pompe à jet 9 de section variable est un élément qui permet par effet Venturi de pressuriser, c'est-à-dire d'accélérer, l'huile de lubrification en provenance du premier circuit 6 et donc en entrée du deuxième circuit 7, l'huile prélevée du premier circuit 6 étant mélangée avec de l'huile provenant directement du réservoir 2 d'huile.

La première chambre 11 peut en effet être entourée par une deuxième chambre 13 dans laquelle débouche de l'huile provenant du réservoir 2 d'huile pour réaliser le débit Qr provenant du réservoir 2 d'huile. Il s'ensuit que l'huile provenant du réservoir 2 d'huile peut ne pas être soumise à l'effet Venturi.

La première chambre 11 peut déboucher dans la deuxième chambre 13 par le débouché 11a de section rétrécie par rapport à la section du reste de la première chambre 11.

Pour assurer une fonction de pompe à jet à section variable, la première chambre 11 peut loger intérieurement un pointeau 12 porté par une extrémité d'une tige 14 mobile dans une longueur de la première chambre 11.

Un déplacement longitudinal de la tige 14 peut être initié par un actionneur piloté à distance par une unité électronique de contrôle U afin d'augmenter ou de diminuer le débit prélevé sur le premier circuit 6 en regard d'un débit de consigne à atteindre dans le premier circuit 6 par enlèvement du débit prélevé par la pompe à jet 9 de section variable. Cette fonction pourrait toutefois être faite avec une buse se déplaçant, comme évoqué dans ce qui précède.

Pour ce faire, le pointeau 12 obstrue plus ou moins le débouché 11a de la première chambre 11 selon sa position dans la longueur de la première chambre 11 et donc limite plus ou moins le débit prélevé du premier circuit 6.

Dans une première forme de réalisation du système 1 selon la présente invention, comme montré à la figure 3, les premier et deuxième circuits 6, 7 de lubrification peuvent alimenter directement respectivement le moteur 5 aéronautique et la boîte 4 à engrenages de réduction sans se rejoindre.

Ces premier et deuxième circuits 6, 7 sont alors séparés et le restent jusqu'à respectivement le moteur 5 aéronautique et la boîte 4 à engrenages de réduction.

Dans une deuxième forme de réalisation du système 1 selon la présente invention, comme montré à la figure 4, les premier et deuxième circuits 6, 7 de lubrification peuvent se rejoindre en aval de la pompe à jet 9 de section variable puis se séparer à nouveau au niveau d'une vanne trois voies 16.

Cette vanne trois voies 16 peut présenter ainsi une voie d'entrée commune aux premier et deuxième circuits 6, 7, une première sortie sur une prolongation du deuxième circuit 7 vers le moteur 5 aéronautique et une deuxième sortie sur une prolongation du premier circuit 6 vers la boîte 4 à engrenages de réduction.

En se référant plus particulièrement aux figures 3 et 4, la ou les premières pompes d'alimentation 3 peuvent être disposées sur un arbre 3b entraîné directement ou indirectement par la boîte 4 à engrenages de réduction, la boîte 4 à engrenages de réduction ou l'organe d'entraînement intercalé faisant office de premiers moyens de motorisation 3a.

Le débit Q1 sortant de la ou des premières pompes d'alimentation 3 ou débit du premier circuit 6 avant prélèvement d'une partie de débit Qp par la pompe à jet 9 de de section variable est alors en correspondance avec la vitesse de rotation de la boîte 4 à engrenages de réduction, ce qui est très avantageux pour avoir un débit d'huile à la boîte 4 à engrenages de réduction en adéquation avec ses paramètres de fonctionnement.

En ce qui concerne les pompes de recirculation 8 en sortie du moteur 5 aéronautique, ces pompes de recirculation 8 peuvent être aussi disposées et entraînées sur l'arbre 3b de ladite au moins une première pompe 3 d'alimentation, donc entraînées directement ou indirectement par la boîte 4 à engrenages de réduction.

Comme illustré aux figures 1 et 2, il est montré aux figures 3 et 4 deux pompes de recirculation 8 dont une en pointillés pour montrer que ce nombre de deux n'est pas exhaustif et qu'il peut y avoir aussi bien une pompe de recirculation comme plus de deux pompes de recirculation 8.

Un des principaux buts de la présente invention est d'alimenter le moteur 5 aéronautique et la boîte 4 à engrenages de réduction avec la quantité d'huile toujours suffisante mais juste nécessaire pour leur lubrification.

Pour ce faire, la présente invention concerne aussi un ensemble d'une unité électronique de contrôle U et d'un système 1 de lubrification d'un moteur 5 aéronautique et d'une boîte 4 à engrenages de réduction associée au moteur 5 aéronautique.

Pour un système 1 tel que précédemment décrit, l'unité électronique de contrôle intègre des moyens de calcul d'un débit d'huile respectif dans le deuxième circuit 7 vers le moteur 5 aéronautique et dans le premier circuit 6 vers la boîte 4 à engrenages de réduction, afin qu'ils soient approvisionnés en huile au juste besoin, c'est-à-dire sans trop d'huile et avec assez d'huile selon leurs conditions de fonctionnement.

Pour la première forme de réalisation montrée à la figure 3, l'unité électronique de contrôle, non montrée à cette figure, comprend des moyens de commande d'ouverture de la pompe à jet 9 de section variable afin que le débit Q1 - Qp dans le premier circuit 6, après prélèvement par la pompe à jet 9 de section variable de la partie du débit Qp dans le premier circuit 6 pour alimenter le deuxième circuit 7, soit égal au débit d'huile calculé vers la boîte 4 à engrenages de réduction.

De plus, comme la deuxième pompe 10, intégrée dans le deuxième circuit 7, est entraînée par des deuxièmes moyens de motorisation 10a, l'unité de contrôle comprend des moyens de commande d'une vitesse de rotation des deuxièmes moyens de motorisation 10a de la deuxième pompe 10 afin d'assurer le débit d'huile calculé dans le deuxième circuit 7 et envoyé au moteur aéronautique 5.

Pour la deuxième forme de réalisation montrée à la figure 4, l'unité électronique de contrôle intègre des moyens de commande de la vanne trois voies 16 afin d'assurer le débit d'huile calculé dans le deuxième circuit 7 vers le moteur 5 aéronautique et le débit d'huile calculé dans le premier circuit 6 vers la boîte 4 à engrenages de réduction.

L'invention concerne aussi une turbomachine en tant que moteur 5 aéronautique comportant un ensemble d'une unité électronique de contrôle et d'un système 1 de lubrification tel que précédemment décrit.

Il peut être nécessaire de faire des estimations d'impact du vieillissement des pompes afin de permettre une régulation au plus juste pendant la durée de vie des pompes.

La présente invention concerne un procédé de régulation d'un débit d'huile de lubrification dans une turbomachine telle que décrite précédemment avec son système 1 de lubrification.

Dans ce procédé, il est effectué un calcul des débits respectifs vers le moteur 5 aéronautique et la boîte 4 à engrenages de réduction. Le procédé met en suite en oeuvre des lois de pilotage de la pompe à jet 9 de section variable et, le cas échéant, de la vanne trois voies 16 pour que les débits effectifs vers le moteur 5 aéronautique et la boîte 4 à engrenages de réduction soient respectivement égaux aux débits respectifs calculés.

La figure 6 montre deux courbes de besoin et d'estimation de débit envoyé pour la lubrification, d'une part, d'une boîte à engrenages de réduction et, d'autre part, d'un moteur aéronautique, les courbes étant en pointillés linéaires pour les deux courbes de débit et sous la forme d'une succession de points pour les courbes de besoin, les points proches les uns des autres étant réunis par des segments de droite pour la courbe de besoin du moteur aéronautique afin de la différencier de la courbe de besoin de la boîte à engrenages de réduction dont les points ne sont pas reliés par des segments.

Le débit d'huile Qh est mesuré en litres par heure l/h pour différentes vitesses V à cette figure 6. La vitesse V est celle de l'arbre du compresseur et de la turbine HP de la turbomachine, et est mesurée par un capteur et exprimée en tr/min.

La courbe d'estimation de débit envoyé dans les enceintes du moteur 5 aéronautique qui est la courbe linéaire supérieure en pointillés linéaires à la figure 6, est sensiblement identique au débit obtenu par des système 1 de lubrification selon l'état de la technique.

La courbe de débit envoyé vers la boîte à engrenages de réduction, obtenue par la mise en oeuvre d'un procédé de régulation selon la présente invention, cette courbe étant la courbe incurvée en pointillés linéaires inférieure à la figure 6, est obtenue au plus près de la courbe de besoin de lubrification de la boîte à engrenages de réduction, cette courbe étant formée par des points non reliés par des segments à la figure 6.

L'invention n'est nullement limitée aux modes de réalisation décrits et illustrés qui n'ont été donnés qu'à titre d'exemples.

## Revendications

1. Système (1) de lubrification d'un moteur (5) aéronautique et d'une boîte (4) à engrenages de réduction associée au moteur (5) aéronautique, le système (1) comprenant un réservoir (2) d'huile de lubrification approvisionnant au moins une première pompe (3) d'alimentation en huile alimentant un premier circuit (6) de lubrification de la boîte (4) à engrenages de réduction débouchant dans au moins une enceinte (4a) de lubrification de la boîte (4) à engrenages de réduction et en parallèle un deuxième circuit (7) de lubrification du moteur (5) aéronautique débouchant dans des enceintes (5a) de lubrification du moteur (5) aéronautique, des pompes de recirculation (8) en sortie du moteur (5) aéronautique et de la boîte (4) à engrenages de réduction retournant l'huile vers le réservoir (2) d'huile, **caractérisé en ce que** le deuxième circuit (7) comprend une pompe à jet (9) de section variable alimentée au moins par ladite au moins une première pompe (3) d'alimentation en dérivation du premier circuit (6), une deuxième pompe (10) d'alimentation entraînée étant intégrée dans le deuxième circuit (7) en aval de la pompe à jet (9) de section variable, une partie d'un débit (Qp) dans le premier circuit (6) étant prélevée par la pompe à jet (9) de section variable pour alimenter le deuxième circuit (7).

2. Système (1) selon la revendication précédente, dans lequel la pompe à jet (9) de section variable est aussi alimentée par le réservoir (2) d'huile, un débit (Q2) dans le deuxième circuit (7) en sortie de la pompe à jet (9) de section variable étant la somme de la partie du débit prélevée (Qp) dans le premier circuit (6) par la pompe à jet (9) de section variable avec un débit (Qr) provenant du réservoir (2) d'huile via la pompe à jet (9) de section variable.

3. Système (1) selon la revendication précédente, dans lequel la pompe à jet (9) de section variable présente une première chambre (11) de forme conique tronquée au sommet se rétrécissant en éloignement d'une embouchure de la pompe à jet (9) de section variable et recevant en son intérieur la partie du débit prélevée (Qp) à partir de l'embouchure, la première chambre (11) étant entourée par une deuxième chambre (13) dans laquelle débouche de l'huile provenant du réservoir (2) d'huile, la première chambre (11) débouchant dans la deuxième chambre (13) par un débouché (11a) en logeant intérieurement un pointeau (12) porté par une extrémité d'une tige (14) mobile dans une longueur de la première chambre (11), un déplacement longitudinal de la tige (14) étant piloté par un actionneur, le pointeau (12) obstruant plus ou moins le débouché (11a) de la première chambre (11) selon sa position dans la longueur de la première chambre (11).

4. Système (1) selon l'une quelconque des revendications 1 à 3, dans lequel les premier et deuxième circuits (6, 7) de lubrification alimentent directement respectivement le moteur (5) aéronautique et la boîte (4) à engrenages de réduction sans se rejoindre.

5. Système (1) selon l'une quelconque des revendications 1 à 3, dans lequel les premier et deuxième circuits (6, 7) de lubrification se rejoignent en aval de la pompe à jet (9) de section variable puis se séparent à nouveau au niveau d'une vanne trois voies (16) avec une voie d'entrée commune aux premier et deuxième circuits (6, 7), une première sortie sur une prolongation du deuxième circuit (7) vers le moteur (5) aéronautique et une deuxième sortie sur une prolongation du premier circuit (6) vers la boîte (4) à engrenages de réduction.

6. Système (1) selon l'une quelconque des revendications précédentes, dans lequel ladite au moins une première pompe (3) d'alimentation est disposée sur un arbre (3b) entraîné directement ou indirectement par la boîte (4) à engrenages de réduction en tant que premiers moyens de motorisation (3a).

7. Système (1) selon la revendication précédente, dans lequel les pompes de recirculation (8) en sortie du moteur (5) aéronautique sont disposées et entraînées sur l'arbre (3b) de ladite au moins une première pompe (3) d'alimentation.

8. Ensemble d'une unité électronique de contrôle (U) et d'un système (1) de lubrification d'un moteur (5) aéronautique et d'une boîte (4) à engrenages de réduction associée au moteur (5) aéronautique, **caractérisé en ce que** le système (1) est selon l'une quelconque des revendications précédentes, l'unité électronique de contrôle intégrant des moyens de calcul d'un débit d'huile respectif dans le deuxième circuit (7) vers le moteur (5) aéronautique et dans le premier circuit (6) vers la boîte (4) à engrenages de réduction,
- l'unité électronique de contrôle comprenant des moyens de commande d'ouverture de la pompe à jet (9) de section variable afin que le débit (Q1 - Qp) dans le premier circuit (6), après prélèvement par la pompe à jet (9) de section variable de la partie du débit (Qp) dans le premier circuit (6) pour alimenter le deuxième circuit (7), soit égal au débit d'huile calculé vers la boîte (4) à engrenages de réduction et, la deuxième pompe (10) étant entraînée par des deuxièmes moyens de motorisation (10a), l'unité de contrôle comprenant des moyens de commande d'une vitesse de rotation des deuxièmes moyens de motorisation (10a) de la deuxième pompe (10) afin d'assurer le débit d'huile calculé dans le deuxième circuit (7), ou
- l'unité électronique de contrôle intégrant des moyens de commande de la vanne trois voies (16) afin d'assurer le débit d'huile calculé dans le deuxième circuit (7) vers le moteur (5) aéronautique et le débit d'huile calculé dans le premier circuit (6) vers la boîte (4) à engrenages de réduction.

9. Turbomachine en tant que moteur (5) aéronautique comportant un ensemble d'une unité électronique de contrôle et d'un système (1) de lubrification selon la revendication précédente.

10. Procédé de régulation d'un débit d'huile de lubrification dans une turbomachine selon la revendication précédente, **caractérisé en ce qu'**il est effectué un calcul des débits respectifs vers le moteur (5) aéronautique et la boîte (4) à engrenages de réduction, le procédé mettant en oeuvre des lois de pilotage de la pompe à jet (9) de section variable et, le cas échéant, de la vanne trois voies (16) pour que les débits effectifs vers le moteur (5) aéronautique et la boîte (4) à engrenages de réduction soient respectivement égaux aux débits respectifs calculés.

## Patentansprüche

1. System (1) zur Schmierung eines Flugzeugmotors (5) und eines mit dem Flugzeugmotor (5) verbundenen Untersetzungsgetriebekastens (4), wobei das System (1) einen Schmieröltank (2) umfasst, der mindestens eine erste Ölversorgungspumpe (3) beliefert, die einen ersten Schmierkreislauf (6) des Untersetzungsgetriebekastens (4), der in mindestens ein Schmiergehäuse (4a) des Untersetzungsgetriebekastens (4) mündet, und parallel dazu einen zweiten Schmierkreislauf (7) des Flugzeugmotors (5), der in Schmiergehäuse (5a) des Flugzeugmotors (5) mündet, versorgt, Rückführpumpen (8) am Ausgang des Flugzeugmotors (5) und des Untersetzungsgetriebekastens (4), die das Öl zu dem Öltank (2) zurückführen, **dadurch gekennzeichnet, dass** der zweite Kreislauf (7) eine Strahlpumpe (9) mit variablem Querschnitt umfasst, die mindestens von der mindestens einen ersten Versorgungspumpe (3) in Abzweigung des ersten Kreislaufs (6) versorgt wird, eine zweite angetriebene Versorgungspumpe (10) in den zweiten Kreislauf (7) stromabwärts der Strahlpumpe (9) mit variablem Querschnitt integriert ist, wobei ein Teil eines Durchflusses (Qp) in dem ersten Kreislauf (6) von der Strahlpumpe (9) mit variablem Querschnitt entnommen wird, um den zweiten Kreislauf (7) zu versorgen.

2. System (1) nach dem vorstehenden Anspruch, wobei die Strahlpumpe (9) mit variablem Querschnitt auch von dem Öltank (2) versorgt wird, wobei ein Durchfluss (Q2) in dem zweiten Kreislauf (7) am Ausgang der Strahlpumpe (9) mit variablem Querschnitt die Summe des Teils des Durchflusses (Qp) ist, der in dem ersten Kreislauf (6) von der Strahlpumpe (9) mit variablem Querschnitt mit einem Durchfluss (Qr) entnommen wird, der über die Strahlpumpe (9) mit variablem Querschnitt aus dem Öltank (2) kommt.

3. System (1) nach dem vorstehenden Anspruch, wobei die Strahlpumpe (9) mit variablem Querschnitt eine erste Kammer (11) mit konischer Form aufweist, die an der Spitze abgestumpft ist, die sich in Entfernung von einer Mündung der Strahlpumpe (9) mit variablem Querschnitt verengt und in ihrem Inneren den Teil des Durchflusses aufnimmt, der ab der Mündung entnommen wird (Qp), wobei die erste Kammer (11) von einer zweiten Kammer (13) umgeben ist, in die Öl mündet, das aus dem Öltank (2) kommt, die erste Kammer (11) in die zweite Kammer (13) durch eine Mündung (11a) mündet, indem sie innen eine Nadel (12) aufnimmt, die von einem Ende einer Stange (14) getragen wird, die in einer Länge der ersten Kammer (11) beweglich ist, wobei eine Längsverschiebung der Stange (14) von einem Aktuator gesteuert wird, wobei die Nadel (12) die Mündung (11a) der ersten Kammer (11) gemäß ihrer Position in der Länge der ersten Kammer (11) mehr oder weniger verschließt.

4. System (1) nach einem der Ansprüche 1 bis 3, wobei der erste und der zweite Schmierkreislauf (6, 7) den Flugzeugmotor (5) bzw. den Untersetzungsgetriebekasten (4) direkt versorgen, ohne zusammenzutreffen.

5. System (1) nach einem der Ansprüche 1 bis 3, wobei der erste und der zweite Schmierkreislauf (6, 7) stromabwärts der Strahlpumpe (9) mit variablem Querschnitt zusammentreffen, sich dann im Bereich eines Dreiwegeventils (16) wieder trennen, mit einem gemeinsamen Eintrittsweg für den ersten und den zweiten Kreislauf (6, 7), einem ersten Ausgang auf einer Verlängerung des zweiten Kreislaufs (7) zum Flugzeugmotor (5) und einem zweiten Ausgang auf einer Verlängerung des ersten Kreislaufs (6) zum Untersetzungsgetriebekasten (4).

6. System (1) nach einem der vorstehenden Ansprüche, wobei die mindestens eine erste Versorgungspumpe (3) auf einer Welle (3b) angeordnet ist, die direkt oder indirekt durch den Untersetzungsgetriebekasten (4) als erste Motorisierungsmittel (3a) angetrieben wird.

7. System (1) nach dem vorstehenden Anspruch, wobei die Rückführpumpen (8) am Ausgang des Flugzeugmotors (5) auf der Welle (3b) der mindestens einen ersten Versorgungspumpe (3) angeordnet sind und angetrieben werden.

8. Anordnung aus einer elektronischen Steuereinheit (U) und einem System (1) zur Schmierung eines Flugzeugmotors (5) und eines dem Flugzeugmotor (5) zugeordneten Untersetzungsgetriebekasten (4), **dadurch gekennzeichnet, dass** das System (1) nach einem der vorstehenden Ansprüche ausgeführt ist, die elektronische Steuereinheit Mittel zur Berechnung eines jeweiligen Öldurchflusses in dem zweiten Kreislauf (7) zu dem Flugzeugmotor (5) und in dem ersten Kreislauf (6) zu dem Untersetzungsgetriebekasten (4) integriert,
- wobei die elektronische Steuereinheit Mittel zur Steuerung der Öffnung der Strahlpumpe (9) mit variablem Querschnitt umfasst, damit die Durchflussmenge (Q1 - Qp) im ersten Kreislauf (6), nach Entnahme des Teils des Durchflusses (Qp) im ersten Kreislauf (6) durch die Strahlpumpe (9) mit variablem Querschnitt, um den zweiten Kreislauf (7) zu versorgen, gleich dem berechneten Öldurchfluss zum Untersetzungsgetriebekasten (4) ist und, wobei die zweite Pumpe (10) durch zweite Motorisierungsmittel (10a) angetrieben wird, wobei die Steuereinheit Mittel zur Steuerung einer Drehzahl der zweiten Motorisierungsmittel (10a) der zweiten Pumpe (10) umfasst, um den berechneten Öldurchfluss in den zweiten Kreislauf (7) zu gewährleisten, oder
- wobei die elektronische Steuereinheit Mittel zur Steuerung des Dreiwegeventils (16) integriert, um den berechneten Öldurchfluss in dem zweiten Kreislauf (7) zu dem Flugzeugmotor (5) und den berechneten Öldurchfluss in dem ersten Kreislauf (6) zu dem Untersetzungsgetriebekasten (4) zu gewährleisten.

9. Turbomaschine als Flugzeugmotor (5), die eine Anordnung aus einer elektronischen Steuereinheit und einem Schmiersystem (1) nach dem vorstehenden Anspruch aufweist.

10. Verfahren zur Regelung eines Schmieröldurchflusses in einer Turbomaschine nach dem vorstehenden Anspruch, **dadurch gekennzeichnet, dass** eine Berechnung der jeweiligen Durchflüsse zu dem Flugzeugmotor (5) und dem Untersetzungsgetriebekasten (4) durchgeführt wird, wobei das Verfahren Gesetze zur Steuerung der Strahlpumpe (9) mit variablem Querschnitt und gegebenenfalls des Dreiwegeventils (16) implementiert, damit die tatsächlichen Durchflüsse zu dem Flugzeugmotor (5) und dem Untersetzungsgetriebekasten (4) jeweils gleich den jeweiligen berechneten Durchflüssen sind.

## Claims

1. A system (1) for lubricating an aeronautical engine (5) and a reduction gearbox (4) associated with the aeronautical engine (5), the system (1) comprising a lubricating oil reservoir (2) feeding at least a first oil supply pump (3) supplying a first lubrication circuit (6) of the reduction gearbox (4) opening into at least one lubrication enclosure (4a) of the reduction gearbox (4) and in parallel a second lubrication circuit (7) of the aeronautical engine (5) opening into lubrication enclosures (5a) of the aeronautical engine (5), recirculation pumps (8) at the exit of the aeronautical engine (5) and of the reduction gearbox (4) returning the oil to the oil reservoir (2), **characterized in that** the second circuit (7) comprises a variable-section jet pump (9) supplied at least by said at least one first supply pump (3) bypassing the first circuit (6), a second driven supply pump (10) being integrated into the second circuit (7) downstream of the variable-section jet pump (9), a part of a flow rate (Qp) in the first circuit (6) being collected by the variable-section jet pump (9) to supply the second circuit (7).

2. The system (1) according to the preceding claim, wherein the variable-section jet pump (9) is also supplied from the oil reservoir (2), a flow rate (Q2) in the second circuit (7) at the exit of the variable-section jet pump (9) being the sum of the part of the flow rate (Qp) collected from the first circuit (6) by the variable-section jet pump (9) with a flow rate (Qr) coming from the oil reservoir (2) via the variable-section jet pump (9).

3. The system (1) according to the preceding claim, wherein the variable-section jet pump (9) has a first chamber (11) of truncated conical shape at the top, narrowing away from a mouth of the variable-section jet pump (9) and receiving in its interior the part of the flow rate (Qp) collected from the mouth, the first chamber (11) being surrounded by a second chamber (13) into which the oil from the oil reservoir (2) opens, the first chamber (11) opening into the second chamber (13) via an outlet (11a), internally housing a needle (12) carried by one end of a rod (14) movable along a length of the first chamber (11), a longitudinal displacement of the rod (14) being controlled by an actuator, the needle (12) obstructing to a greater or lesser extent the outlet (11a) of the first chamber (11) depending on its position along the length of the first chamber (11).

4. The system (1) according to any one of claims 1 to 3, wherein the first and second lubrication circuits (6, 7) directly supply the aeronautical engine (5) and the reduction gearbox (4) respectively without merging.

5. The system (1) according to any one of claims 1 to 3, wherein the first and second lubrication circuits (6, 7) merge downstream of the variable-section jet pump (9) and then separate again at the level of a three-way valve (16) with an inlet way common to the first and second circuits (6, 7), a first exit on an extension of the second circuit (7) to the aeronautical engine (5) and a second exit on an extension of the first circuit (6) to the reduction gearbox (4).

6. The system (1) according to any one of the preceding claims, wherein said at least one first supply pump (3) is arranged on a shaft (3b) driven directly or indirectly by the reduction gearbox (4) as first motorization means (3a).

7. The system (1) according to the preceding claim, wherein the recirculation pumps (8) at the exit of the aeronautical engine (5) are arranged and driven on the shaft (3b) of said at least one first supply pump (3).

8. An assembly of an electronic control unit (U) and a system (1) for lubricating an aeronautical engine (5) and a reduction gearbox (4) associated with the aeronautical engine (5), **characterized in that** the system (1) is according to any of the preceding claims, the electronic control unit incorporating means for calculating a respective oil flow rate in the second circuit (7) to the aeronautical engine (5) and in the first circuit (6) to the reduction gearbox (4),
- the electronic control unit comprising means for controlling the opening of the variable-section jet pump (9) so that the flow rate (Q1 - Qp) in the first circuit (6), after the variable-section jet pump (9) has collected the part of the flow rate (Qp) in the first circuit (6) in order to supply the second circuit (7) is equal to the calculated oil flow rate to the reduction gearbox (4) and, the second pump (10) being driven by second motorization means (10a), the control unit comprising means for controlling a speed of rotation of the second motorization means (10a) of the second pump (10) in order to ensure the calculated oil flow rate in the second circuit (7), or
- the electronic control unit incorporating means for controlling the three-way valve (16) in order to ensure the calculated oil flow rate in the second circuit (7) to the aeronautical engine (5) and the calculated oil flow rate in the first circuit (6) to the reduction gearbox (4).

9. A turbomachine as an aeronautical engine (5) comprising an assembly of an electronic control unit and a lubrication system (1) according to the preceding claim.

10. A method for regulating a flow rate of lubricating oil in a turbomachine according to the preceding claim, **characterized in that** is performed a calculation of the respective flow rates to the aeronautical engine (5) and the reduction gearbox (4), the method implementing laws for controlling the variable-section jet pump (9) and, where appropriate, the three-way valve (16) so that the actual flow rates to the aeronautical engine (5) and the reduction gearbox (4) are respectively equal to the respective calculated flow rates.
